# EUROPEAN PATENT APPLICATION

(11) **EP 4 761 304 A1**
(43) Date of publication of application: **17.06.2026**
(21) Application number: 24864399.1
(22) Date of filing: 20.08.2024
(51) Int. Cl.: H04W 4/50

(54) **SERVICE MANAGEMENT METHOD, AND TERMINAL, NETWORK DEVICE, MANAGEMENT SERVER, AND MEDIUM**

(30) Priority: 11.09.2023 CN 202311170597
(71) Applicant: ZTE CORPORATION, Shenzhen, Guangdong 518057 (CN)
(72) Inventor: ZHENG, Jun, Shenzhen, Guangdong 518057 (CN); ZHANG, Xueliang, Shenzhen, Guangdong 518057 (CN)
(74) Representative: Canzler & Bergmeier Patentanwälte Partnerschaft mbB
(86) International application number: PCT/CN2024/113281
(87) International publication number: WO 2025/055676

(57) **Abstract**

Provided in the present disclosure is a service management method, wherein the method is based on a terminal. The method comprises: sending identification information to a network device, wherein the identification information comprises an identifier of a terminal; receiving service state information sent by the network device, wherein the service state information comprises a valid service subscribed to by the terminal; and on the basis of the service state information, establishing and storing local service information, wherein the local service information comprises the valid service. Further provided in the present disclosure are a terminal, a network device, a management server, and a computer-readable medium.

## Description

### CROSS-REFERENCE TO RELATED APPLICATIONS

This application claims priority to Chinese patent application No. 202311170597.X, filed on September 11, 2023, the contents of which are incorporated hereby by reference in their entirety.

### TECHNICAL FIELD

The present disclosure relates to the technical field of service management, and particularly relates to a service management method, a terminal, a network device, a management server, and a computer-readable medium.

### BACKGROUND

Terminals in a communication network may subscribe to different services, which, in some cases, need to be managed, e.g. queried, modified, or managed in other ways.

However, the current service management methods are inconvenient, troublesome and time-consuming to operate, cannot realize bulk management of a large number of terminals (such as internet of things terminals), and are not suitable for some terminals (such as terminals without voice services or operation interfaces).

### SUMMARY

The present disclosure provides a service management method, a terminal, a network device, a management server, and a computer-readable medium.

In a first aspect, an embodiment of the present disclosure provides a terminal based service management method, wherein the method includes:
sending identification (ID) information to a network device, wherein the ID information includes an ID of the terminal;
receiving service state information sent from the network device, wherein the service state information includes a valid service subscribed by the terminal; and
establishing and storing local service information based on the service state information, wherein the local service information includes the valid service.

In a second aspect, an embodiment of the present disclosure further provides a network device based service management method, wherein the method includes:
receiving ID information sent from a terminal, wherein the ID information includes an ID of the terminal;
determining a valid service subscribed by the terminal based on the ID information; and
sending service state information to the terminal, wherein the service state information includes the valid service.

In a third aspect, an embodiment of the present disclosure further provides a management server based service management method, wherein the method includes:
receiving local service information sent from a terminal through a dedicated connection with the terminal, wherein the local service information sent from the terminal includes a valid service subscribed by the terminal; and
recording the valid service of the terminal.

In a fourth aspect, an embodiment of the present disclosure further provides a terminal, including a memory and a processor; wherein the memory stores a computer program executable by the processor which, when executed by the processor, causes any one of the service management methods according to the embodiments of the present disclosure to be implemented.

In a fifth aspect, an embodiment of the present disclosure provides a network device, including a memory and a processor; wherein the memory stores a computer program executable by the processor which, when executed by the processor, causes any one of the service management methods according to the embodiments of the present disclosure to be implemented.

In a sixth aspect, an embodiment of the present disclosure provides a management server, including a memory and a processor; wherein the memory stores a computer program executable by the processor which, when executed by the processor, causes any one of the service management methods according to the embodiments of the present disclosure to be implemented.

In a seventh aspect, an embodiment of the present disclosure provides a computer-readable medium storing a computer program thereon which, when executed by a processor, causes any one of the service management methods according to the embodiments of the present disclosure to be implemented.

### BRIEF DESCRIPTION OF DRAWINGS

In the drawings of the present disclosure:
FIG. 1 is a flowchart of a service management method for a terminal according to an embodiment of the present disclosure;
FIG. 2 is a flowchart of a service management method for a network device according to an embodiment of the present disclosure;
FIG. 3 is a flowchart of a service management method for a management server according to an embodiment of the present disclosure;
FIG. 4 is a block diagram of a terminal according to an embodiment of the present disclosure;
FIG. 5 is a block diagram of a network device according to an embodiment of the present disclosure;
FIG. 6 is a block diagram of a management server according to an embodiment of the present disclosure;
FIG. 7 is a block diagram of a computer-readable medium according to an embodiment of the present disclosure;
FIG. 8 is a schematic diagram showing a network architecture in another service management method according to an embodiment of the present disclosure;
FIG. 9 is a signaling diagram showing a procedure (1) of an example of a service management method according to an embodiment of the present disclosure;
FIG. 10 is a signaling diagram showing a procedure (2) of an example of a service management method according to an embodiment of the present disclosure;
FIG. 11 is a signaling diagram showing a procedure (3) of an example of a service management method according to an embodiment of the present disclosure;
FIG. 12 is a signaling diagram showing a procedure (4) of an example of a service management method according to an embodiment of the present disclosure; and
FIG. 13 is a signaling diagram showing a procedure (5) of an example of a service management method according to an embodiment of the present disclosure.

### DETAIL DESCRIPTION OF EMBODIMENTS

To improve understanding of the technical solution of the present disclosure for those skilled in the art, the service management method, the terminal, the network device, the management server, and the computer-readable medium provided in the embodiments of the present disclosure will be described in detail below in conjunction with the drawings.

The present disclosure will be described more sufficiently below with reference to the accompanying drawings, where the illustrated embodiments may be embodied in different forms. However, the present disclosure should not be construed as being limited to the embodiments set forth herein. Rather, these embodiments are provided so that the present disclosure will be thorough and complete, and will fully convey the scope of the present disclosure to those skilled in the art.

Accompanying drawings are provided for further understanding of the embodiments of the present disclosure and constitute a part of the specification. Hereinafter, these drawings are intended to explain the present disclosure together with the detailed embodiments, but should not be considered as a limitation to the present disclosure. The above and other features and advantages will become more apparent to those skilled in the art by describing the detailed embodiments with reference to the accompanying drawings.

The present disclosure may be described with reference to plan and /or sectional views in idealized representations of the present disclosure. Accordingly, the example illustrations may be modified in accordance with the manufacturing process and /or the tolerance.

Embodiments of the present disclosure and features thereof may be combined with each other without conflict.

The terminology used herein is for the purpose of describing specific embodiments only and is not intended to limit the present disclosure. As used herein, the term "and/or" includes any and all combinations of one or more of the associated listed items. As used herein, the singular forms "a", "an" and "the" are intended to include the plural forms as well, unless the context clearly indicates otherwise. As used herein, the terms "comprise" and "consist of ..." specify the presence of the stated features, integers, steps, operations, elements, and /or components, but do not preclude the presence or addition of one or more other features, integers, steps, operations, elements, components, and /or groups thereof.

Unless otherwise defined, all terms (including technical and scientific terms) used in the present disclosure have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined in the present disclosure.

The present disclosure is not limited to the embodiments shown in the drawings, but includes modifications of configurations formed based on a manufacturing process. Therefore, the regions illustrated in the figures have schematic properties, and the shapes of the regions shown in the figures illustrate specific shapes of regions of elements, but are not intended to be limiting.

With the development of the fifth generation mobile communication technology (5G) and the sixth generation mobile communication technology (6G), more and more terminals (e.g., internet of things terminals) can access a communication network (e.g., a 5G network and/or a 6G network), and these terminals can subscribe to various services within the communication network.

Therefore, in many cases, the user may need to query, modify or perform other types of management on the services subscribed by the terminal (for example, a SIM card subscription).

In some existing technologies, the user may go to a business hall of an operator or contact a service person so that the service person can query and modify a subscribed service in the background.

In some other existing technologies, the user may operate an APP or a webpage on a terminal to implement service management; or the user may dial the service call through the terminal and perform key operations according to prompts, thereby implementing the service management.

As can be seen, the above service management methods are very inconvenient, and especially the method of going to a business hall or contacting a service person is more troublesome and time-consuming.

Moreover, the above service management modes can only implement management of a "single" terminal. However, with the development of the technology, the number of terminals and services is increased sharply. For example, the number of internet of things terminals (such as household appliances, street lamps, cameras, electric meters, water meters, and the like) managed by one user may be up to dozens or even tens of thousands, and the number of possible services may also be up to tens of thousands. It is obviously impractical to manage so many terminals and services in a one-by-one operation manner.

In addition, some service management methods have specific requirements on the terminal and are not applicable to some terminals. For example, to implement service management by dialing a service call, it is required that the terminal should be capable of implementing an air interface voice service, which is impossible if the terminal only subscribes to a data service but cannot dial a phone call. For another example, a service management mode for operating an APP or a webpage requires a terminal capable of implementing a specific operation, but is unavailable to a terminal without an operation interface. However, many terminals, especially internet of things terminals, such as street lamps, cameras, electric meters, water meters, and the like, generally do not have a voice service or an operation interface.

In a first aspect, an embodiment of the present disclosure provides a terminal based service management method.

The method provided in the embodiment of the present disclosure is executed by a terminal, which may be any electronic device capable of connecting a network device and accessing a communication network (i.e., a core network, such as a 5G network, a 6G network, etc.), such as a mobile phone, a tablet, or the like, and particularly an internet of things terminal, such as a household appliance, a street lamp, a camera, an electric meter, a water meter, or the like.

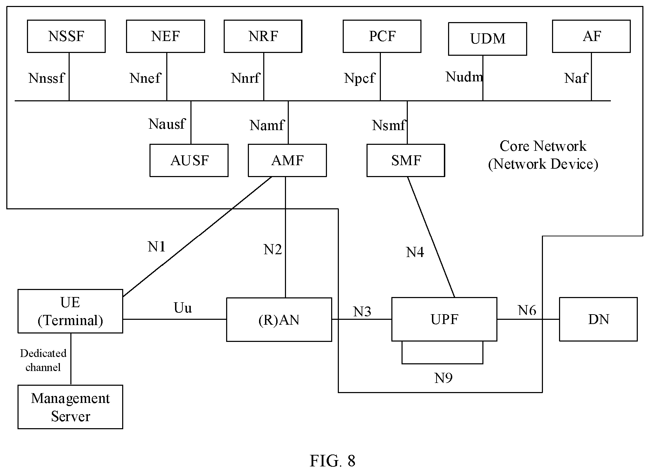

Referring to FIG. 8, the terminal (UE) provided in the embodiment of the present disclosure accesses a communication network through a network device (e.g., a core network), and may subscribe to some services, while the method provided in the embodiment of the present disclosure is used to manage a service subscription status of the terminal.

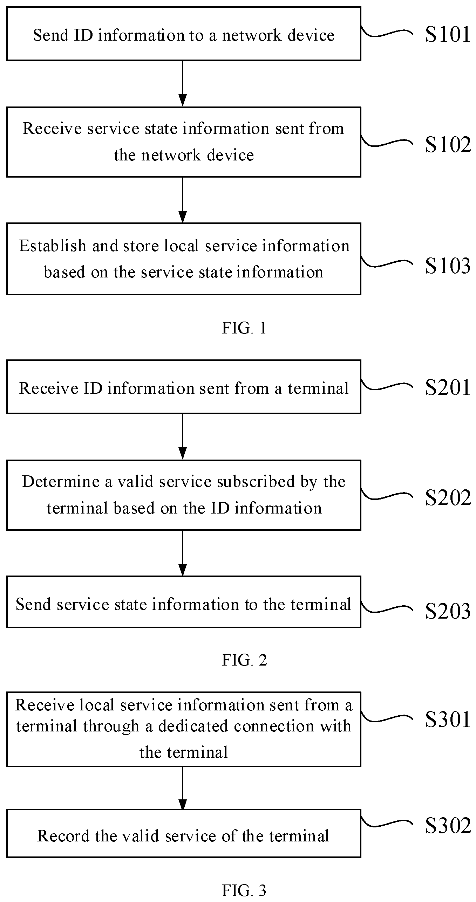

Referring to FIG. 1, a service management method according to an embodiment of the present disclosure may include the following operations S101 to S 103 implemented by a terminal.

Operation S101 includes sending ID information to a network device. The ID information includes an ID of the terminal.

Operation S102 includes receiving service state information sent from the network device. The service state information includes a valid service subscribed by the terminal.

Operation S103 includes establishing and storing local service information based on the service state information. The local service information includes the valid service.

In an embodiment of the present disclosure, after being connected to the network device (for example, when the terminal registers to the communication network after being powered on), the terminal may add an ID (e.g., IMEI) representing the terminal itself into the ID information (e.g., a PDU Session Establishment Request message) which is sent to the network device. Further, the network device may query and obtain a service (valid service) actually subscribed by the terminal at this time according to the ID of the terminal, and add the valid service into the service state information (e.g., a PDU session request accept message) which is fed back to the terminal.

After receiving the service state information, the terminal may parse the service state information to obtain the status of the valid service of the terminal itself, establish local service information (e.g., a service list) recording the valid service of the terminal itself, and store the local service information locally. That is, each terminal records therein its own valid service status.

It should be understood that the method provided in the embodiment of the present disclosure may further include other contents.

For example, the ID information may also be a PDU Session Establishment Request message, which may include other contents besides the ID.

For another example, after receiving the ID information, the network device, in addition to determining the valid service, may further perform other procedures (including interaction between modules within the network device) for establishing the PDU session.

For another example, the service state information may also be a PDU session request accept message, after receiving which the terminal may, in addition to storing the local service information, further perform other PDU session establish procedures (e.g., feeding back a PDU session establish acknowledge message to the network device).

In an embodiment of the present disclosure, a new service management mechanism is adopted between the terminal and the communication network (core network), and the valid service status (local service information) is directly recorded in the terminal, so that the terminal can modify the local service information and then inform the network device of modifying the service state. Therefore, instead of going to a business hall or contacting a service person, or performing through a communication network (such as an APP and a webpage), a voice service (such as calling a customer service), and the like, the management of the information inside the terminal can be implemented by directly operating the terminal, controlling the terminal by a management server, or the like. Therefore, the embodiment of the disclosure is convenient and quick to manage the services (such as inquiring, modifying and the like), can realize bulk management of a large number of terminals (such as internet of things terminals), and can even be carried out when the terminals are not networked (a communication network is not accessible); moreover, the embodiment of the present disclosure has no requirement on the property of the terminal, and can be implemented even if the terminal (e.g., an internet of things terminal) only has a data service without a voice service or an operation interface.

In some embodiments, the service state information further includes a recommended service for the terminal, and the local service information further includes the recommended service.

As an implementation of the embodiments of the present disclosure, the service state information received by the terminal may further include a service recommended by the network device to the terminal (recommended service), so that the terminal may also store the recommended service in the local service information (service list).

In some embodiments, when needed (for example, when the local service information is established, or when the user performs a certain operation), the terminal may further present the recommended service (for example, through display, voice broadcast, and the like) for selection by the user.

In some embodiments, as another implementation of the embodiments of the present disclosure, the terminal can still store the recommended service in the local service information even when the terminal does not have a function of presenting a recommended service (for example, the terminal is a street lamp), so that after sending the local service information to the management server subsequently, the recommended service can be presented on the management server for selection by the user (which will be described in detail later).

Therefore, the embodiment of the present disclosure can also implement service recommendation, thereby increasing the possibility of expanding services, and giving more choices to users and thus improving the user experience.

In some embodiments, after establishing and storing the local service information (operation S103), the service management method may further include the following operations S104B1 and S104B2.

Operation S104B1 includes receiving service change information sent from the network device. The service change information includes a change in the valid service.

Operation S104B2 includes updating the local service information based on the service change information.

As an implementation of the embodiments of the present disclosure, upon finding a change (addition, deletion, modification, and the like; for example, when a valid service is expired) in the valid service status of the terminal, the network device may add the change in the valid service status to the service change information which is sent to the terminal, and the terminal may modify its local service information (for example, delete the expired valid service) based on the received service change information, thereby ensuring that the latest valid service status is always recorded in the local service information.

It should be understood that, in some embodiments, if the recommended service is changed (for example, a new service is released), the above procedure may also be triggered. In other words, the network device may add the change in the recommended service status to the service change information, and the terminal may also update the recommended service status recorded in the local service information after receiving the service change information.

In some embodiments, after establishing and storing the local service information (operation S103), the service management method may further include the following operations S104C1 to S104C3.

Operation S104C1 includes receiving a service modification instruction. The service modification instruction is configured to indicate a modification of the valid service in the local service information of the terminal.

Operation S104C2 includes updating the local service information based on the service modification instruction.

Operation S104C3 includes sending service modification information to the network device based on the updated local service information. The service modification information includes a modification of the valid service in the local service information of the terminal.

As an implementation of the embodiments of the present disclosure, the user may actively send a service modification instruction to the terminal to modify (add, delete, modify, such as add a certain recommended service to the valid service) the valid service status recorded in the local service information in the terminal. Furthermore, the terminal may generate service modification information based on the above modification, and send the service modification information to the network device so that the network device can perform a corresponding modification (such as subscribe to the new recommended service for the terminal).

Therefore, in the embodiment of the present disclosure, the user can directly operate the terminal to complete the modification of the actually subscribed valid service, which is convenient and easy to implement.

In some embodiments, the user may modify the local service information in various manners. For example, the user may directly operate the terminal, or may control the terminal through a management server (which will be described later).

It should be understood that, depending on different states of the terminal itself upon receiving the service modification instruction, the specific manner in which the terminal sends the service modification information to the network device and the specific manner in which the network device processes the service modification information may differ.

For example, if the terminal is in a connected state upon receiving the service modification instruction, the terminal may send a PDU session modification request message to the network device as the service modification information, and the network device may obtain the modification to the valid service in the process of the PDU session for modification.

For another example, if the terminal is in an idle state upon receiving the service modification instruction, the terminal may send a service request message to the network device as the service modification information, and the network device may obtain the modification to the valid service in the process of service request.

In some embodiments, the service state information includes an extended Protocol Configuration Option (ePCO) parameter.

As an implementation of the embodiments of the present disclosure, the ePCO parameter may be used as service state information in the case of transmitting the valid service status.

The ePCO parameter is generally configured to provide additional information used by the terminal to connect to the communication network, and in an embodiment of the present disclosure, parameters for characterizing the service status may be added to the ePCO extended parameter. For example, structures of the service status parameters of 0xFF01H may be as shown in table 1 below, where information of the service is indicated by Protocol ID fields from FF00H to FFFFH in the ePCO.

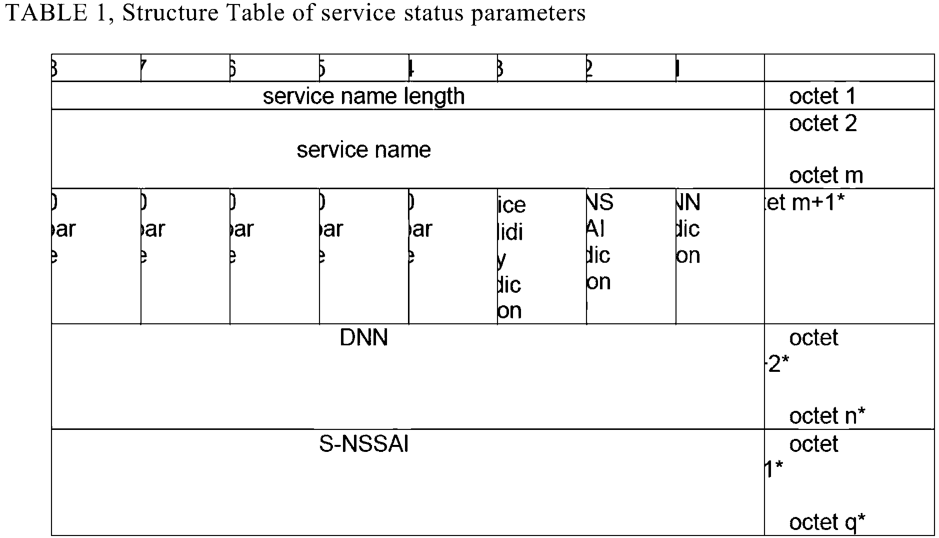

In table 1, service name length indicates a service length; service name indicates a service name; S-NSSAI (Single Network Slice Selection Assistance Information) indication indicates whether slice information is carried, DNN (Data Network Name) indication indicates whether DNN information is carried, where if the terminal enables multi-slice and DNN access, the two flag bits, DNN indication and S-NSSAI indication, should be carried, and if the terminal enables single DNN or single slice, corresponding fields are optional fields and do not need to be carried; and service validity indication indicates a service type, where as an example, a value 0 indicates a recommended service, and a value 1 indicates a valid service.

It should be understood that, in the embodiments of the present disclosure, other information related to the valid service, such as service change information, service modification information, and the like, may also be transmitted between the terminal and the network device in the form of an ePCO parameter, which will not be described in detail herein.

It should be understood that when the ePCO parameter is used for service transmission, the specific fields, formats and the like used are not limited to the above forms.

It should be understood that, in the embodiments of the present disclosure, the information, such as the service state information, the service change information, and the service modification information, is not limited to the form of the ePCO parameter.

In some embodiments, after establishing and storing the local service information (operation S103), the service management method may further include the following operations S105A and /or S105B.

Operation S105A includes sending the local service information to a management server through a dedicated connection with the management server.

Operation S105B includes receiving a service modification instruction sent from a management server through a dedicated connection with the management server. The service modification instruction is configured to indicate a modification of the valid service.

As an implementation of the embodiments of the present disclosure, a separate "management server" may be used for service management of the terminal.

Referring to FIG. 8, the management server is a separate server different from a network device (e.g., core network), and configured to communicate with a plurality of subordinate terminals through a dedicated connection (e.g., a connection protected through encryption with public and private keys, which is also referred to as a dedicated channel), so that service management can be directly performed on the terminals without participation of the network device. For example, a management server for an enterprise may establish connections with, and perform service management on, all internet of things terminals of the enterprise, respectively.

It should be understood that the "dedicated connection" refers to a connection other than "a connection between a terminal and a network device in a communication network", but it does not mean that the dedicated connection cannot pass through a communication network. In other words, the dedicated connection may be a direct connection between the management server and the terminal (such as a near field communication connection), or a connection via a communication network (such as a VPN connection, and the like).

Therefore, after obtaining the local service information (including initially established or updated information), the terminal may send the service related information to the management server through the dedicated connection, so that the management server can obtain the latest service status of all subordinate terminals. Accordingly, the user may modify the valid service of the terminal on the management server, and the management server may send the modification to the corresponding terminal in the form of a service modification instruction, so that the terminal updates the local service information based on the service modification instruction and sends the service modification information to the network device (as discussed in operations S104C1 to S104C3 above).

Therefore, in the embodiments of the present disclosure, the management server can acquire the service information of a plurality of terminals simultaneously, so that massive service information can be queried, such as queried, screened according to complex preset conditions and the like, on the management server; and further, the service status of a large number of terminals (such as all terminals screened out according to certain conditions) can be modified at the management server at one time.

In other words, by providing the management server, the embodiment of the present disclosure can implement "bulk" service management for a large number of terminals, thereby greatly reducing the operation amount for service management, while greatly increasing the number of manageable terminals.

In a second aspect, an embodiment of the present disclosure further provides a network device based service management method.

The method provided in the embodiment of the present disclosure is performed by a network device, which is configured to provide a communication network (i.e., a core network, such as a 5G network, a 6G network, etc.) service for a terminal and provide a service subscribed by the terminal.

Referring to FIG. 8, the network device provided in the embodiment of the present disclosure is connected to a plurality of terminals, and the method provided in the embodiment of the present disclosure is used to manage a service subscription status of the terminal.

Referring to FIG. 8, the network device provided in the embodiment of the present disclosure may include a number of different modules that collectively implement the function of providing a communication network service.

Referring again to FIG. 2, a service management method according to an embodiment of the present disclosure may include the following operations S201 to S203 implemented by a network device.

Operation S201 includes receiving ID information sent from a terminal. The ID information includes an ID of the terminal.

Operation S202 includes determining a valid service subscribed by the terminal based on the ID information.

Operation S203 includes sending service state information to the terminal. The service state information includes the valid service.

When the terminal sends the ID information (for example, when the terminal is powered on to register), the network device queries and determines a service (valid service) currently subscribed by the terminal in a record of the network device based on the ID of the terminal, and adds the valid service to the service state information which is sent to the terminal, so that the terminal can establish local service information based on the service state information.

In some embodiments, between receiving the ID information sent from the terminal (operation S201) and sending the service state information to the terminal (operation S203), the service management method may further include: an operation S2021, determining a recommended service for the terminal based on the ID information. The service state information further includes the recommended service.

As an implementation of the embodiments of the present disclosure, the service state information may further determine what service is to be recommended to the terminal (recommended service) based on the ID of the terminal, and send the recommended service to the terminal through the service state information.

In some embodiments, after sending the service state information to the terminal (operation S203), the service management method may further include: an operation S204A1, sending, in response to a change in the valid service subscribed by the terminal, service change information to the terminal. The service change information includes a change in the valid service.

As an implementation of the embodiments of the present disclosure, upon finding a change in the valid service (recommended service) status of the terminal, the network device may add the corresponding change status to the service change information which is sent to the terminal to update the local service information by the terminal.

In some embodiments, after sending the service state information (operation S203) to the terminal, the service management method may further include the following operations S204B1 and S204B2.

Operation S204B1 includes receiving service modification information sent from the terminal. The service modification information includes a modification of the valid service in the local service information of the terminal.

Operation S204B2 includes updating the recorded valid service based on the service modification information.

After modifying the local service information based on the service modification instruction from the user or the management server, the terminal may send service modification information indicating the corresponding modification to the network device, so that the network device modifies the valid service status of the terminal recorded by the network device based on the service modification information.

In some embodiments, the service state information includes an ePCO parameter.

As an implementation of the embodiments of the present disclosure, the service state information (which may also include service change information, service modification information, etc.) may be in the form of an ePCO parameter.

In a third aspect, an embodiment of the present disclosure further provides a management server based service management method.

The method provided in the embodiment of the present disclosure is performed by a management server, where referring to FIG. 8, the management server is configured to communicate with a plurality of subordinate terminals through a dedicated connection (e.g., a connection protected through encryption with public and private keys), and perform service management on the terminals.

Referring to FIG. 3, a service management method according to an embodiment of the present disclosure may include the following operations S301 and S302.

Operation S301 includes receiving local service information sent from a terminal through a dedicated connection with the terminal. The local service information sent from the terminal includes a valid service subscribed by the terminal.

Operation S302 includes recording the valid service of the terminal.

Upon receiving the local service information sent from the terminal, the management server may record the local service information for later query, modification and the like by a user.

In some embodiments, after recording the valid service of the terminal (operation S302), the service management method may further include: operation S303, sending a service modification instruction to the terminal through the dedicated connection with the terminal.

The service modification instruction is configured to indicate a modification of the valid service in the local service information of the terminal.

The management server may further send a service modification instruction to the terminal, so that the terminal updates the local service information based on the service modification instruction and sends the service modification information to the network device (as discussed in operations S104C1 to S104C3 above).

As discussed before, in some embodiments, if the local service information sent from the terminal includes recommended services, the management server may present the recommended services for the user to select therefrom a service to be added to the terminal, and send a corresponding service modification instruction to the terminal.

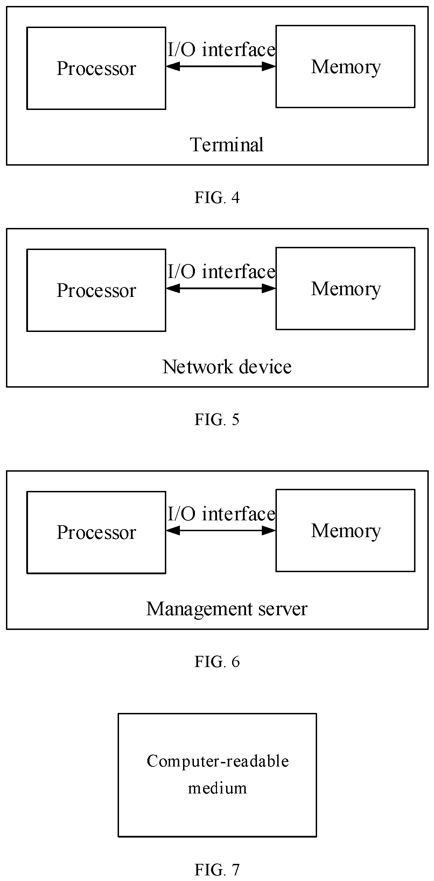

In a fourth aspect, referring to FIG. 4, an embodiment of the present disclosure provides a terminal, including a memory and a processor. The memory stores a computer program executable by the processor which, when executed by the processor, causes any one of the service management methods according to the embodiments of the present disclosure to be implemented.

In a fifth aspect, referring to FIG. 5, an embodiment of the present disclosure provides a network device, including a memory and a processor. The memory stores a computer program executable by the processor which, when executed by the processor, causes any one of the service management methods according to the embodiments of the present disclosure to be implemented.

In a sixth aspect, referring to FIG. 6, an embodiment of the present disclosure provides a management server, including a memory and a processor. The memory stores a computer program executable by the processor which, when executed by the processor, causes any one of the service management methods according to the embodiments of the present disclosure to be implemented.

In a seventh aspect, referring to FIG. 7, an embodiment of the present disclosure provides a computer-readable medium storing a computer program thereon which, when executed by a processor, causes any one of the service management methods according to the embodiments of the present disclosure to be implemented.

The processor is a device with a data processing capability, including but not limited to a central processing unit (CPU), or the like. The memory is a device with a data storage capability, including but not limited to, a random access memory (RAM, such as SDRAM, DDR, etc.), a read-only memory (ROM), an electrically erasable programmable read-only memory (EEPROM) or a flash memory (FLASH). The I/O interface (read/write interface) is connected between the processor and the memory to realize information interaction between the memory and the processor, and include, but are not limited to, Buses or the like.

### Example

The following is an exemplary introduction of an overall process of a service management method according to an embodiment of the present disclosure.

A service management method according to an embodiment of the present disclosure is performed based on a network architecture as shown in FIG. 8.

The user equipment (UE) is a terminal that can subscribe to a service according to the embodiment of the present disclosure, for example, an internet of things terminal.

An (R)AN (Radio Access Network) is composed of a base station (e.g., a gNB), a controller, and the like, and configured to provide radio coverage and radio access services, thereby connecting the UE to a core network.

The core network is the network device provided in the embodiments of the present disclosure, which is connected to the UE through the (R)AN, and further connected to a data network (DN) of an operator, so that services subscribed by the terminal (subscribed to an operator data network) can be managed.

The core network may be a 5G network architecture including a plurality of modules (or network elements) with the following basic functions and relationships.

AMF (Access and Mobility Management Function): the AMF is an interface point between the UE and the SMF, and responsible for handling RAN connection management and mobility management, as well as for security and authorization management of the UE.

SMF (Session Management Function): the SMF is responsible for session management, including creation, modification, release and the like of sessions, as well as for policy and flow control, and the like.

UPF (User Plane Function): the UPF is responsible for handling data packet transmission and forwarding, and is capable of implementing a QoS (Quality of Service) policy.

AUSF (Authentication Server Function): the AUSF is responsible for authentication and management of security policies, as well as for handling session creation with other networks, and may store security information of the UE, such as keys and authentication vectors and the like.

UDM (Unified Data Management): the UDM is used to manage all user data, including user configuration, user policies and access rights, and the like.

PCF (Policy Control Function): the PCF is responsible for policy control, including a target QoS policy, a bandwidth allocation policy, access control, and the like, and may interact with other modules such as the UDM and the UDR to obtain necessary information for policy control.

NSSF (Network Slice Selection Function): the NSSF is responsible for network slice selection, and configured to select a proper network slice for the UE according to the requirement of the UE and the network condition, while coordinating the operation between the SMF and the AMF.

NEF (Network Exposure Function): as an interface to the 5G network, the NEF supports application developers to expose network resources through APIs. The NEF provides a unified way for applications to access network resources. The text on the connection line between different modules represents a type of the corresponding interface, for example, the UE is connected to the (R)AN through Uu (air interface).

Under different cases, the service management method according to an embodiment of the present disclosure may adopt different procedures.

Procedure (1): initiating registration by a UE to obtain a list from the PCF.

This procedure (1) is applied to a case that the UE is inserted with an SIM card and can be powered on normally: after being powered on, the UE initiates a registration process to a communication network, while the PCF sends a service (valid service) subscribed by the UE and a recommended service to the SMF, where the SMF sends service information to the UE through the AMF and a base station by means of an ePCO parameter, and the UE parses the ePCO parameter to obtain and store a service set (local service information) locally.

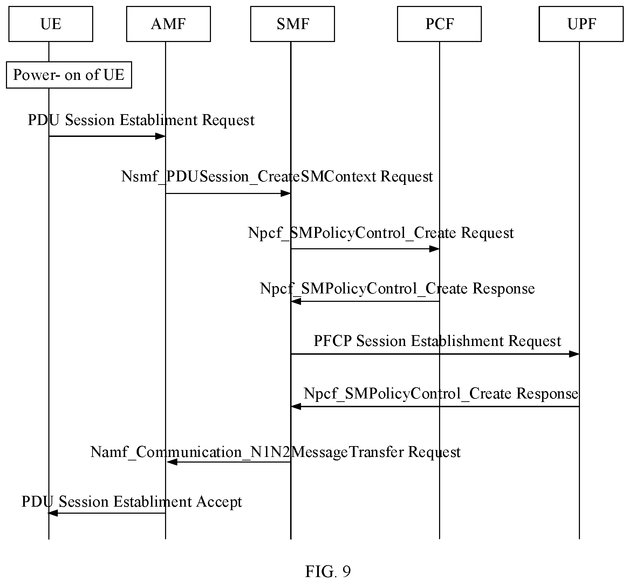

Referring to FIG. 9, the procedure (1) may include the following first to ninth operations.

First operation: the UE initiates a PDU Session Establishment Request message (ID information).

The PDU Session Establishment Request message initiated by the UE includes parameters such as NAS Head, PDU Session Type, 5GSM Capacity, ePCO and the like, and may be carried by a customized parameter in the ePCO.

Second operation: the AMF sends a PDU Session Establishment Request message to the SMF.

The AMF receives the session establishment request message carrying the ePCO parameter via an N1 interface, and forwards the session establishment request message to the SMF through Nsmf_PDUSession_CreateSMContext Request, where the parameters carried in the ePCO remain unchanged.

Third operation: the SMF sends a PDU session policy establishment message to the PCF.

The SMF forwards the PDU session policy establishment message to the PCF through an Npcf_SMPolicyControl_Create Request message.

Fourth operation: the PCF processes the Npcf_SMPolicyControl_Create Request message and returns a response message.

After receiving the Npcf_SMPolicyControl_Create Request message via an N7 interface, the PCF obtains service information in a database based on the IMSI, the DNN and the slice, where the service information includes names of a currently subscribed service (valid service) and a recommended service, which are stored in two array parameters *enableservice* and *recommendedservice,* and these array parameters may include one or more service names. Then, the PCF sends a response message Npcf_SMPolicyControl_Create Response carrying the names of the currently subscribed service and the recommended service to the SMF.

Fifth operation: the SMF decodes the service information and sends the decoded service information to the UPF.

The SMF processes the service information returned by the PCF, and sends a PFCP Session Establishment Request message to the UPF.

Sixth operation: the UPF completes settings of the service names and returns a response message to the SMF.

The UPF receives the service names in the PFCP Session Establishment Request message received via an N4 interface, completes functional settings based on the service names in a media plane, and returns a PFCP Session Establishment Response message to the SMF.

Seventh operation: the SMF carries the service names in an ePCO field.

The SMF encapsulates and carries the service names received through the Npcf_SMPolicyControl_Create Response message into ePCO field of a Namf_Communication_N1N2MessageTransfer Request message, and sends the request message to the AMF.

Eighth operation: the AMF sends the service names to the UE via the N1 interface.

After receiving the ePCO parameter via the N1 interface, the AMF sends the ePCO parameter (service state information) to the UE through a PDU Session Establishment Accept message.

Therefore, after receiving the session request accept message, the UE may decode the ePCO parameter and acquire a service set (local service information) of the UE. The UE stores the service set and provides the service set through interface presentation, and the user may view, import and export the service set through a webpage.

Procedure (2): initiating service information update by the PCF.

This procedure (2) is applied to a case where a core network finds a change in the service status: when the PCF meets a service update trigger condition, the PCF actively initiates service update of the UE, and the update trigger condition may include: a change in the service subscribed by the UE in the PCF, including an addition, deletion or modification of the subscribed service; and a change in the service recommended to the UE in the PCF, including an addition, deletion or modification of the recommended service.

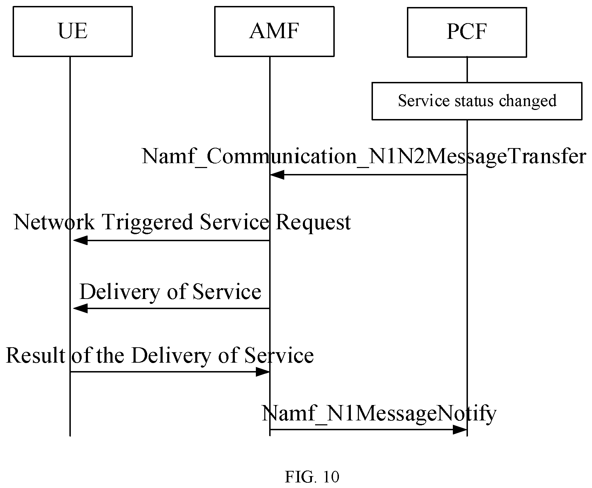

Referring to FIG. 10, the procedure (2) may include the following first to fifth operations.

First operation: the PCF sends a Namf_Communication_N1N2MessageTransfer message to the AMF.

The Namf_Communication _N1N2MessageTransfer message includes an SUPI, service information of the UE and a notification destination address, and the service information of the UE includes names of the changed service subscribed by the UE and recommended service.

Second operation: the core network triggers a service request procedure.

If the UE is in an idle state and is reachable for base station access (where the UE becomes idle due to long-term inactivity), the AMF sends a Network Triggered Service Request: if the AMF fails to page the UE, the AMF sends a Namf_Communication_N1N2TransferFailureNotification message to the PCF to inform that the service information of the UE cannot be transmitted to the UE; and if the AMF successfully pages the UE, the UE initiates a service request process.

Third operation: the AMF sends service information to the UE.

If the UE is in a connected state, the AMF transparently delivers the service information (service change information) of the UE received from the PCF to the UE (Delivery of Service).

Fourth operation: the UE returns a service set update result.

The UE receives the service information, updates a local service set, and returns an update result (Result of the Delivery of Service) to the AMF.

Fifth operation: the AMF notifies the PCF of a Namf_N1MessageNotify message.

AMF receives the service set update result returned by UE and subscribes to the PCF, and forwards a response of the UE to the PCF through Namf_N1MessageNotify. The PCF processes a push state and an update time of the UE service in a database, where the push state is completed, and the update time is a current system time.

Procedure (3): changing service information in a connected state of the UE.

This procedure (3) is applied to a case where the service set of the UE is modified according to a service modification instruction from a user or a management server, and the UE is in a connected state: when the UE is in a connected state, if the user modifies a service name in the service set on the UE, the UE triggers a PDU session modification procedure, sends the new service name carried in an ePCO parameter to the PCF, and updates the new service name to the UPF.

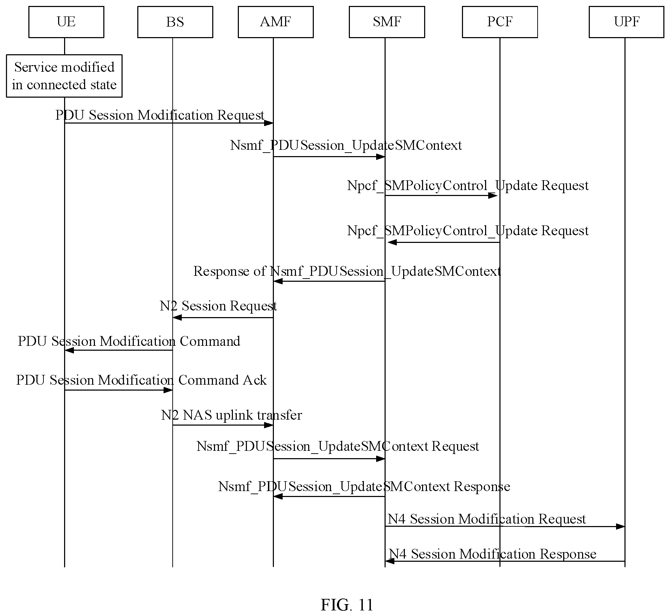

Referring to FIG. 11, the procedure (3) may include the following first to thirteenth operations.

### First operation: PDU Session Modification Request

If the UE finds that its service is modified and the UE is in a connected state, the UE initiates a PDU session modification request (service modification information) to the AMF to modify the established PDU session, where the message carries an ePCO parameter including a new service name.

### Second operation: Nsmf_PDUSession_UpdateSMContext

After receiving the PDU Session Modification Request, the AMF generates a Nsmf_PDUSession_UpdateSMContext message based on the content of the request, where the message contains a service name and other SM context related information to be updated, such as a QoS flow to be added or deleted, and information of network slices to be modified.

### Third operation: Npcf_SMPolicyControl_Update Request

The SMF sends a Npcf_SMPolicyControl_Update Request message to the PCF, where the message carries the new service name.

### Fourth operation: Npcf_SMPolicyControl_Update Response

After receiving the Npcf_SMPolicyControl_Update Request, the PCF extracts the service name and updates the service name to the database, and meanwhile, generates a Npcf_SMPolicyControl_Update Response message which is sent to the SMF for further processing, where the message includes new service information.

### Fifth operation: Response of Nsmf_PDUSession_UpdateSMContext

The SMF transmits the new service name to the AMF through an ePCO field carried in the Response of Nsmf_PDUSession_UpdateSMContext.

### Sixth operation: N2 Session Request

The AMF encapsulates the ePCO field into an NAS message which is sent to the base station through an N2 Session Request message.

### Seventh operation: PDU Session Modification Command

After receiving the N2 Session Request message, the base station sends the NAS message to the UE through a PDU Session Modification Command, and the UE parses the ePCO parameter and extracts the new service name.

### Eighth operation: PDU Session Modification Command Ack

Upon determining that the new name is consistent with the name modified by the user, the UE returns a PDU Session Modification Command Ack message which carries an operation result of the UE successfully setting the new service and related parameters to the base station.

### Ninth operation: N2 NAS uplink transfer.

The base station sends the operation result of the UE successfully setting the new service to the AMF through an N2 NAS uplink transfer message by an NAS layer information.

### Tenth operation: Nsmf_PDUSession_UpdateSMContext Request.

The AMF sends a Nsmf_PDUSession_UpdateSMContext Request message including a new service name to the SMF.

### Eleventh operation: Nsmf_PDUSession_UpdateSMContext Response

After receiving the Nsmf_PDUSession_UpdateSMContext Request message, the SMF stores the new service name of the UE, and returns a Nsmf_PDUSession_UpdateSMContext Response message to the AMF.

### Twelfth operation: N4 Session Modification Request

The SMF constructs and sends an N4 Session Modification Request message including the new service information to the UPF.

### Thirteenth operation: N4 Session Modification Response

After receiving the N4 Session Modification Request message, the UPF updates the new service information of the UE and enables a message identification rule included in the service information. Meanwhile, an N4 Session Modification Response message is generated and sent to the SMF.

Procedure (4): changing service information in an idle state of the UE.

This procedure (4) is applied to a case where the service set of the UE is modified according to a service modification instruction from a user or a management server, and the UE is in an idle state: when the UE is in an idle state, if the user modifies a service name in the service set on the UE, the UE initiates a service request procedure and sends an ePCO parameter including a new service name to the PCF, and the PCF sends a response to the UE and the UPF after successfully processing the parameter locally, so that the new service state becomes effective in a timely manner.

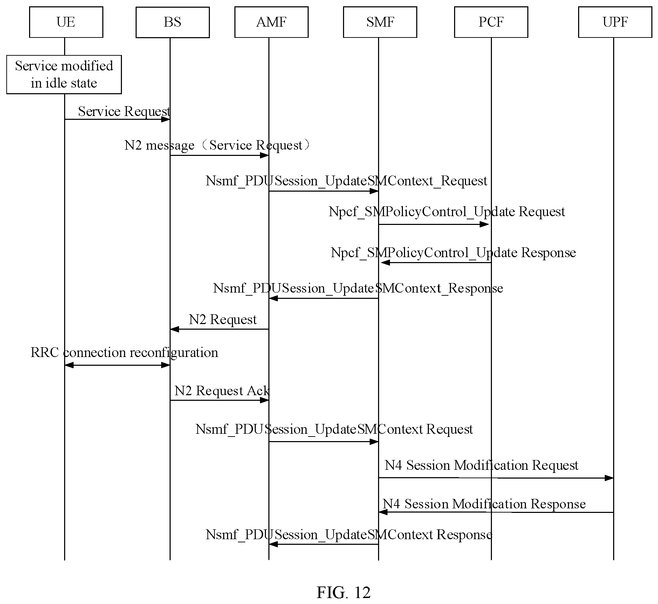

Referring to FIG. 12, the procedure (4) may include the following first to thirteenth operations.

### First operation: Service Request

If the UE finds that its service is modified and the UE is in a connected state, the UE triggers a service request procedure, and sends a Service Request message (service modification information) to the base station, where the message carries the ePCO parameter containing a new service name, a UE ID, a requested service type, a QoS parameter and other information.

### Second operation: N2 message (Service Request)

After receiving the Service Request message, the base station sends an N2 message (Service Request) to the AMF, where the message carries information including an ePCO parameter containing a new Service name, a UE identifier, a requested Service type, a QoS parameter, and the like.

### Third operation: Nsmf_PDUSession_UpdateSMContext_Request

The AMF then sends a Nsmf_PDUSession_UpdateSMContext_Request message to the SMF, where the message carries information including an ePCO parameter containing a new service name, a UE ID, a requested service type, a QoS parameter and the like.

### Fourth operation: Npcf_SMPolicyControl_Update Request

The SMF sends a Npcf_SMPolicyControl_Update Request message carrying the new service name to the PCF.

### Fifth operation: Npcf_SMPolicyControl_Update Response

The PCF parses and updates the new service name to a database, while constructing a Npcf_SMPolicyControl_Update Response message including the new service name as a response.

### Sixth operation: Nsmf_PDUSession_UpdateSMContext_Response

The SMF sends a Nsmf_PDUSession_UpdateSMContext_Response message to the AMF, where the message includes information such as the determined new service name, UE ID, QoS parameter.

### Seventh operation: N2 Request

The AMF sends an N2 Request message to the base station to request to establish a data path for the UE while carrying a new service to be transmitted to the UE.

### Eighth operation: RRC connection reconfiguration

The UE exchanges an RRC connection reconfiguration message with the base station, updates resource configuration for the requested service, transmits the new service to the UE for confirmation, and informs the base station if the UE is successfully set to the new service.

### Ninth operation: N2 Request Ack

After receiving the new service name of the UE, the base station sends an N2 Request Ack message to the AMF, indicating successful establishment of the data path and the new service name.

### Tenth operation: Nsmf_PDUSession_UpdateSMContext Request

After receiving the new service name, the AMF sends another Nsmf_PDUSession_UpdateSMContext Request message to the SMF, where the message includes the new service name and update information about the current session, such as an IP address of the UPF.

### Eleventh operation: N4 Session Modification Request

The SMF sends an N4 Session Modification Request message carrying the new service name to the UPF to request to establish a data path for the session.

### Twelfth operation: N4 Session Modification Response

The UPF sends an N4 Session Modification Response message to the SMF as a response, confirming that the data path is successfully established and the service name is updated.

Thirteenth operation: The SMF sends a Nsmf_PDUSession_UpdateSMContext Response message to the AMF, indicating that the data path is successfully established and the new service has taken effect.

### Procedure (5): managing massive UEs with a management server

This procedure (5) is applied to a case where a dedicated management server is used for managing massive UEs (such as internet of things UEs): a management server is introduced into a network architecture for managing services of massive UEs, where the management server may be accessed by massive UEs, receive and store a service set from each UE, query and present the services of the massive UEs according to different conditions, initiate bulk modifications on the services of the UEs which meet certain conditions, and then send the changes in the services to PCF and the UPF through the UEs to implement bulk management of the massive UEs.

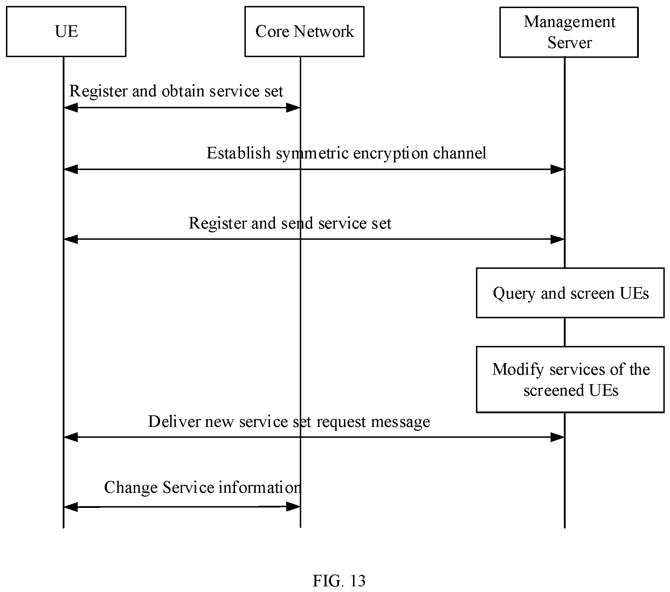

Referring to FIG. 13, the process of the procedure (5) may include the following first to seventh operations.

First operation: after being powered on, the UE initiates a registration process to a core network (such as a 5G core network or 5GC) according to the procedure (1), and acquires and stores a service set locally.

Second operation: the management server generates a public and private key pair using an asymmetric encryption algorithm (such as RSA or ECC). To communicate with the management server, the UE sends an https request to the management server to request a public key to the management server. Then, the UE generates a random password encrypted with the public key provided by the management server, and sends the encrypted random password to the management server through an https connection. Upon receiving the encrypted random password from the UE, the management server decrypts the encrypted random password with its own private key to obtain the original random password. Therefore, both the management server and the UE have the same random password now, and use this random password to establish a symmetric encryption channel (dedicated connection), through which following communications between the UE and the management server can be implemented, thereby ensuring the confidentiality and integrity of data.

Third operation: after locally storing the service set, the UE sends a registration request message (local service information) to the management server, where parameters carried in the message include a subscribed service name, a recommended service name, an IMEI (International Mobile Equipment Identity), a GPS parameter, a time for acquiring the service, an operating system version, a software version, hardware information, and the like. The IMEI is a unique ID of the UE, and can be used as a basis for distinguishing information of different UEs by the management server. After receiving the registration request message, the management server stores the data therein in a local database, and sends a response message to the UE, where parameters carried in the response message include a result mark, a cause value, a time parameter, and the like. The management server may actually receive and store a large amount of relevant information of the UE.

Fourth operation: When the UEs to be managed are all registered to the management server, data query can be performed on the management server according to the service name, the service type (subscribed or recommended), map information, the IMEI, and the like. For example, UEs matched with the conditions such as subscribed service, recommended service, slicing, DNN, and the like may be queried on a large scale on an interface provided by the management server, and when map information is loaded on the management server, UEs can be screened by the GPS parameters of the UEs according to the conditions such as province, city, district, town, street, community, road, and the like, and UEs with the same longitude and latitude but different heights can be displayed in a layered gradient manner. Considering the large data volume, all the queries can be sent to a front end in batches based on selections of the user by adopting a back-end paging technology.

Fifth operation: For the large number of screened UEs meeting the conditions, the user can modify their subscribed services on the interface of the management server. After the user settings are completed, the interface may be converted into a change progress interface which displays the total number of current UEs, the number of UEs successfully modified, the number of UEs failing to be modified, and the like, and the failure reasons can be queried for the UEs failing to be modified, where the failure reason has a domain and failure details, the domain includes a management server, a UE and a core network, and the failure details are detailed failure information in a certain domain.

Sixth operation: the management server is provided with a controller with a queue function at a back end, and the controller converts the determined massive UEs into batched queues to avoid overloading the management server. The controller performs service change on the UEs in batches based on a first-in first-out principle in the queue, that is, delivers a new service set request message (service modification instruction) to the corresponding UE through a service set with the UE.

Seventh operation: after receiving the message, the UE compares the new service name with the locally stored service set: if a comparison result shows that the new service name is consistent with the locally stored service set, a response message carrying an ID of successful change is returned to the management server through a symmetric encryption channel; and if the comparison result shows that the new service name is not consistent with the locally stored service set, the UE modifies the local service set, performs the above process of changing the service information according to the above procedure (3) or (4) based on the connected state or idle state of the UE, and returns a response message to the management server through the symmetric encryption channel based on a result of whether the modification of the information in the core network is successful.

Those of ordinary skill in the art will appreciate that all or some operations, function modules/units in the system and apparatus disclosed above may be implemented as software, firmware, hardware, and suitable combinations thereof.

In a hardware implementation, the division between the function modules/units mentioned in the above description does not necessarily correspond to the division of physical components; for example, one physical component may have multiple functions, or one function or operation may be performed cooperatively by several physical components.

Some or all physical components may be implemented as software executed by a processor, such as a central processing unit (CPU), a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable media implemented in any method or technology for storing information, such as computer-readable instructions, data structures, program modules or other data. The computer storage medium includes, but is not limited to, a random access memory (RAM, more specifically SDRAM, DDR, etc.), a read only memory (ROM), an electrically erasable programmable read-only memory (EEPROM), a flash memory (FLASH), or other disk storage; a compact disk read-only memory (CD-ROM), a digital versatile disk (DVD), or other optical disk storage; a magnetic cassette, a magnetic tape, a magnetic disk memory or any other magnetic storage; or any other medium which can be used to store the desired information and accessed by a computer. Moreover, it is well known to those of ordinary skill in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and /or elements described in connection with a particular embodiment may be used alone or in combination with features, characteristics and /or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A terminal based service management method, wherein the method comprises:
sending identification (ID) information to a network device, wherein the ID information comprises an ID of the terminal;
receiving service state information sent from the network device, wherein the service state information comprises a valid service subscribed by the terminal; and
establishing and storing local service information based on the service state information, wherein the local service information comprises the valid service.

2. The method according to claim 1, wherein the service state information further comprises a recommended service for the terminal, and the local service information further comprises the recommended service.

3. The method according to claim 1, wherein after establishing and storing the local service information, the method further comprises:
receiving service change information sent from the network device, wherein the service change information comprises a change in the valid service; and
updating the local service information based on the service change information.

4. The method according to claim 1, wherein after establishing and storing the local service information, the method further comprises:
receiving a service modification instruction, wherein the service modification instruction is configured to indicate a modification of the valid service in the local service information of the terminal;
updating the local service information based on the service modification instruction; and
sending service modification information to the network device based on the updated local service information, wherein the service modification information comprises a modification of the valid service in the local service information of the terminal.

5. The method according to claim 1, wherein
the service state information comprises an extended Protocol Configuration Option (ePCO) parameter.

6. The method according to claim 1, wherein after establishing and storing the local service information, the method further comprises:
sending the local service information to a management server through a dedicated connection with the management server;
and/or,
receiving a service modification instruction sent from a management server through a dedicated connection with the management server, wherein the service modification instruction is configured to indicate a modification of the valid service.

7. A network device based service management method, wherein the method comprises:
receiving ID information sent from a terminal, wherein the ID information comprises an ID of the terminal;
determining a valid service subscribed by the terminal based on the ID information; and
sending service state information to the terminal, wherein the service state information comprises the valid service.

8. The method according to claim 7, wherein between receiving the ID information sent from the terminal and sending the service state information to the terminal, the method further comprises:
determining a recommended service for the terminal based on the ID information, wherein the service state information further comprises the recommended service.

9. The method according to claim 7, wherein after sending the service state information to the terminal, the method further comprises:
sending, in response to a change in the valid service subscribed by the terminal, service change information to the terminal, wherein the service change information comprises the change in the valid service.

10. The method according to claim 7, wherein after sending the service state information to the terminal, the method further comprises:
receiving service modification information sent from the terminal, wherein the service modification information comprises a modification of the valid service in the local service information of the terminal; and
updating the recorded valid service based on the service modification information.

11. The method according to claim 7, wherein
the service state information comprises an ePCO parameter.

12. A management server based service management method, wherein the method comprises:
receiving local service information sent from a terminal through a dedicated connection with the terminal, wherein the local service information sent from the terminal comprises a valid service subscribed by the terminal; and
recording the valid service of the terminal.

13. The method according to claim 12, wherein after recording the valid service of the terminal, the method further comprises:
sending a service modification instruction to the terminal through the dedicated connection with the terminal, wherein the service modification instruction is configured to indicate a modification of the valid service in the local service information of the terminal.

14. A terminal, comprising a memory and a processor; wherein the memory stores a computer program executable by the processor which, when executed by the processor, causes the service management method according to any one of claims 1 to 6 to be implemented.

15. A network device, comprising a memory and a processor; wherein the memory stores a computer program executable by the processor which, when executed by the processor, causes the service management method according to any one of claims 7 to 11 to be implemented.

16. A management server, comprising a memory and a processor; wherein the memory stores a computer program executable by the processor which, when executed by the processor, causes the service management method according to claim 12 or 13 to be implemented.

17. A computer-readable medium storing a computer program thereon which, when executed by a processor, causes the service management method according to any one of claims 1 to 13 to be implemented.
